# EUROPEAN PATENT SPECIFICATION

(11) **EP 3 455 562 B1**
(45) Date of publication and mention of the grant of the patent: **14.02.2024**
(21) Application number: 17729932.8
(22) Date of filing: 10.05.2017
(51) Int. Cl.: F24S 20/66

(54) **A COVER STRUCTURE FOR SOLAR MODULES AND ITS METHOD OF MANUFACTURE**
ABDECKUNGSSTRUKTUR FÜR SOLARMODULE UND DEREN VERFAHREN ZUR HERSTELLUNG
STRUCTURE DE COUVERTURE POUR MODULES SOLAIRES ET PROCÉDÉ DE FABRICATION ASSOCIÉ

(30) Priority: 10.05.2016 NL 2016746
(43) Date of publication of application: 20.03.2019
(73) Proprietor: EXA-IP B.V., 2497 GC Den Haag (NL)
(72) Inventor: MENSINK, Michiel, Herman, 2596 TD DEN HAAG (NL)
(74) Representative: HGF
(86) International application number: PCT/NL2017/050290
(87) International publication number: WO 2017/196170

(56) References cited:
- DE-U1- 29 901 824
- US-A- 2 874 612
- US-A- 5 680 734
- US-A1- 2011 167 735
- US-A1- 2015 222 223

## Description

The invention relates to a cladding or cover structure for solar modules.

More specifically, the invention relates to a cladding or cover structure for solar modules for covering or masking photovoltaic, solar thermal modules or even windows.

US 5 680 734 A discloses a cover for solar modules according to the preamble of claim 1.

Increasingly, not only the roofs of buildings are covered by such modules, also the outer facades are covered by such energy harvesting modules. These modules can however negatively influence the appearance of the building, especially if large areas are covered by such modules since they are usually black or dark blue to absorb as much sunlight as possible. This may provide a less appealing esthetics.

Accordingly it is an object of the invention to mitigate or solve the above described and/or other problems of solar module covered walls or tilted roofs in the art, while maintaining and/or improving the advantages thereof.

More specifically the object of the invention can be seen in providing a solution to the appearance of solar modules integrated or mounted on objects, e.g. walls, pitched roofs, facades and/or other objects suitable to mount solar modules on. These objects could include sound barriers, cars, trucks, boats and other mobile or immobile installations. The appearance alterations of the solar modules are obtained without impairing the functioning thereof.

These and/or other objects are reached by a cover structure for solar modules according to claim 1.

Here the layer of coating, ink or paint may be transparent for light of certain wavelengths, e.g. those outside the visible spectrum. Infrared light for instance may pass the layer, whereas visible light is more absorbed, reflected or scattered. In such way, most of the light may reach the solar module behind the cover structure while the visual effects by the layer are still provided.

Due to the coating, a person viewing from a certain angle will see mostly a colour, decoration or the image from one surface of the prism, while the solar radiation mostly impinges the surface from other angles and can still reach the solar cells through the transparant side of the prisms.

Thus the solar panel can be covered or masked, without the normal spectator noticing that there is a solar module, while the heat or light collecting functionality of the solar module is only marginally affected.

The decoration or the image can span over at least a number of prisms or e.g. over the entire series of prisms, wherein the decoration or image can be composed of the individual portions. Thus the individual portions of the decoration may build up an entire wall covering decoration or image. Thus entire buildings can appear to be painted or decorated, while there may be invisible solar panels or even windows behind the decorations, where normal daylight and/or sunlight may enter unblocked or unhindered.

The prisms may contain rounded inner and outer edges or may even have curved sides and look more like a sine wave than a prism, to improve manufacturability.

The first and second surfaces of the prisms extend from a first side of a sheet material, wherein the material is transparent having a first refractive index. The prisms are embedded in a second material having a second refractive index.

By embedding the prisms in a second material, the occurrence of crevices between the prisms can be prevented, such that an unwanted accumulation of dust in these crevices can be avoided.

The second refractive index can be different from the first refractive index or the second refractive index can be the same as the first refractive index. By changing the refractive index, various manipulations of the sunlight may be possible.

The cover structure can be applied on a photovoltaic or thermal solar cell. Thus, the cover structure can be a multi layered building cover, where the directional decoration and the solar cells are provided in one combined product. This can enhance a rapid installation of the cover structure and an efficient finishing of building structures.

The prisms can be less than 1 mm in height, e.g. less than 200 micro meter in height. By these relative small dimensions of the prisms, viewers will not notice the actual cover with the image or decoration being composed from separate portions and will experience the image or decoration as a regular one piece image or decoration. These small dimensions also help in reducing production costs.

The invention further relates to a method of manufacturing a cover structure as described herein above, wherein the method comprises the following steps: a) providing a substrate; b) providing the substrate with prisms; c) providing at least one of the surfaces with a non-transparent layer of ink or paint being a portion of a decoration or of an image. By these steps a cover structure is provided with the advantages as indicated herein above.

The substrate and the prisms can alternatively be manufactured by extrusion through an appropriate die. This may be appropriate for manufacturing the structure from e.g. plastics or glass.

The prisms can be made by an embossing roll; wherein a resin can be applied to the substrate, and the embossing roll can transform the resin to a layer on the substrate, in which layer the prisms are embossed and cured while embossing; wherein the curing can take place by means of heat and/or UV radiation at or near the pinch point of the embossing roll. This manufacturing method can provide a continuous or semi continuous production of the cover structure, wherein quality of the material can be monitored well.

The prism structure can alternatively be provided in a first positive mould, being provided with the prismatic structure from which can be made a soft negative second mould made from rubber like materials, in which second mould the prism structure of the cover is manufactured. For dedicated batches of cover material, this manufacturing technique may provide advantages, such as the application of dedicated images or small manufacturing series.

The prisms can be alternatively or additionally be pressed, embossed, grinded or machined from solid material. This production technique may provide a prism structure in materials that are not suited for curing techniques. The prism structure can alternatively fabricated through an extrusion or extrusion coating. If the prism structure is made from thermoplastic materials, this manufacturing technique may be advantageous. A potential die assisted stretching may be applied.

The coating on the prism structure can be provided by means of photographic method: e.g. coating the prism structure with a positive or negative photosensitive coating, exposure to a directional light source, developing the coating, such that on one of the sets extending surfaces a coating remains.

By using a photographic step, the light exposure can be very neatly directed to one set of surfaces only, such that an image or decoration can indeed be precisely generated on one set of the surfaces only.

The coating can alternatively or additionally be provided by means of precise inkjet printing or precise laser printing. Here the ink jets can provide the image on the material directly, or the material may be selectively be treated photographically, such that the ink only binds to the second elongated surfaces whereas the ink does not bind to the other set of surfaces.

The ink jet printing step can alternatively be performed after a selective photographic exposure and developing step, where one of the extending surfaces is exposed or treated, such that the ink binds to one of the extending surfaces only.

Other printing or dispensing techniques may also be used to deposit a pigmented coating on only a part of the cover. Alternatively, the coating may be applied by spray coating. Here a spray nozzle or spray gun can be positioned under a specific angle with respect to the prismatic structure of the cover structure. In such way, the spray droplets have an initial trajectory and inertia, that can drive them to hit one face of the prisms better than the other.

Alternatively, the coating may be provided by means of an engraved structure. Here the relief in the engraved structure may hold an ink or coating in the recesses of the engraved structure like e.g. intaglio printing. Otherwise the relief in the engraved structure may hold the ink or coating on the projections of the engraved structure such as relief printing.

The coating can alternatively be applied by means of a transfer material such as a web or foil. The transfer material with coating strokes, applied to the coating under the specifically adjusted distances, corresponding with the dimensions of the series of prisms can be guided to the prisms. This can be performed by e.g. using an additional pressing roll, or using roll 20, where the transfer material transfers the coating to the prism structure.

Intaglio printing using a structured cylinder can also be used for applying the coating. Alternatively, a structured porous or felt like material can be used to partially coat the prismatic structure.

The invention still further relates to an assembly of a solar module and the cover structure according to the invention.

In order to further elucidate the invention, exemplary embodiments will be described with reference to the figures. In the figures:
Figure 1 depicts a schematic cross sectional view of a cover structure according to an embodiment of the invention;
Figure 2 depicts a schematic cross sectional view of a cover structure, the sun and an observer according to another embodiment of the invention;
Figure 3 depicts a front side view of a cover structure according to a further embodiment of the invention;

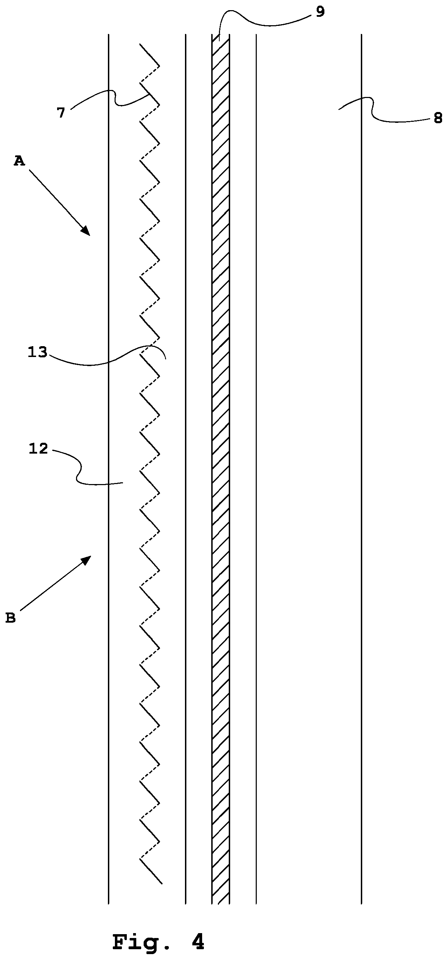

Figure 4 depicts a cross sectional view of a cover structure according to yet another embodiment of the invention;
Figure 5 depicts a cross sectional view of a cover structure according to an further alternative embodiment of the invention;
Figure 6 depicts a schematic processing scheme of a method of manufacturing a cover structure according to another embodiment of the invention;
Figure 7 depicts a schematic perspective view of a method of manufacturing a cover structure according to yet another embodiment of the invention;
Figure 8 depicts a schematic perspective view of a detail of figure 7; and

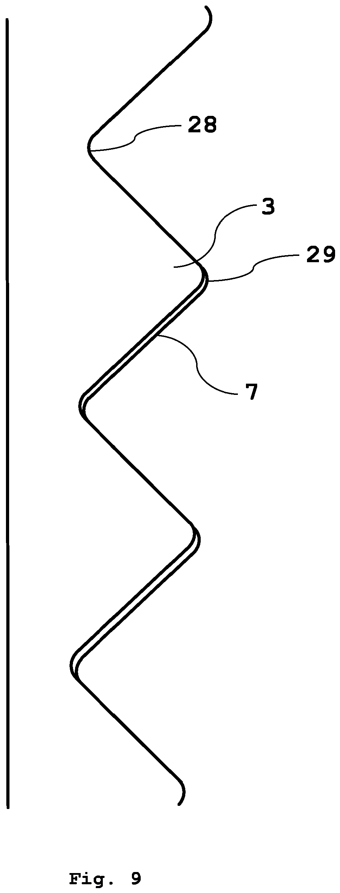

Figure 9 depicts a schematic cross section of a cover structure according to yet another embodiment of the invention.

The figures represent specific exemplary embodiments of the inventions and should not be considered limiting the invention in any way or form. Throughout the description and the figures the same or corresponding reference numerals are used for the same or corresponding elements.

The expression "prism" used herein is to be understood as, though not to be considered limited to a geometrical shape, where in the cross section over a stretched length of the shape remains the same.

The expression "series of prism" used herein is to be understood as, though not to be considered limited to a multitude of prisms, wherein the multitude of prisms are aligned parallel to each other, wherein these prisms are identical or different.

The expression "cover structure" used herein is to be understood as, though not to be considered limited to e.g. such prims-like profiles, used to cover a given surface, by any means of attaching the structure, e.g. gluing, static electric adhering, vacuum adhering and/or melting.

The expression "solar module" used herein is to be understood as, though not to be considered limited to a thermal solar module, a photovoltaic solar module, a light intake such as a window or light guide or any other means that uses or allows to transfer light, especially sunlight.

The expression "non-transparent layer" used herein is to be understood as, though not to be considered limited to a layer that may be transparent for light of certain wavelengths, e.g. those outside the visible spectrum. Infrared light for instance may pass the layer, whereas visible light is more absorbed, reflected or scattered.

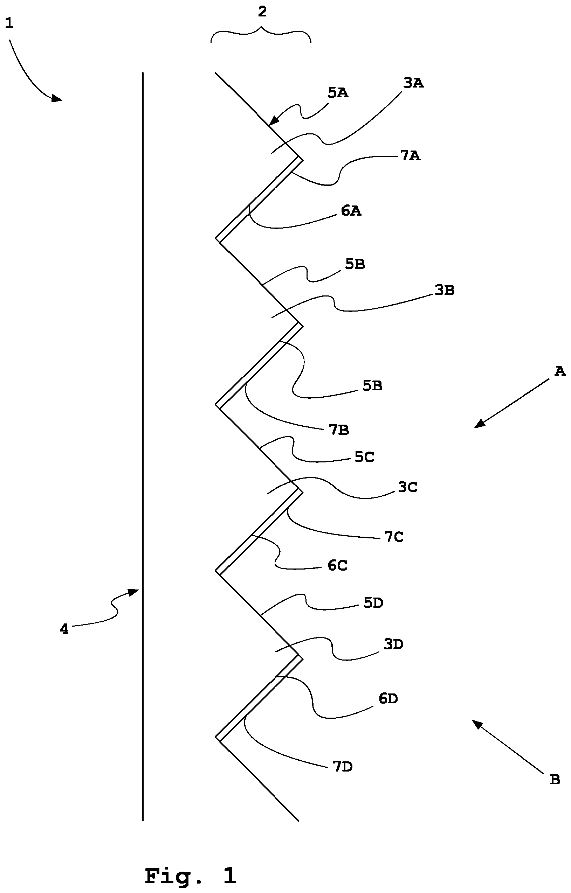

In figures 1-3, a cover structure 1 is depicted being provided with a prism structure 2, wherein the prism structure is formed as a sheet material comprises a series of prisms 3A-3F. The cover structure comprises a substantially flat surface 4. Each of the prisms 3A-3F comprises two surfaces 5A-5F and 6A-6F respectively. The surfaces 5A-5F and 6A-6F are extending from the sheet material in a direction being not parallel with the flat surface 4. The extending surfaces 5A-5F remain uncovered, and since the material of the cover structure is transparent, light can enter in the cover material through these surfaces 5A-5F. The surfaces 6A-6F on the other hand are coated with a layer 7A-7F of ink, paint or coating. Thus light can enter from a first direction A, whereas light from a second direction B is reflected and/or absorbed by the coating or paint of layers 7A-7F.

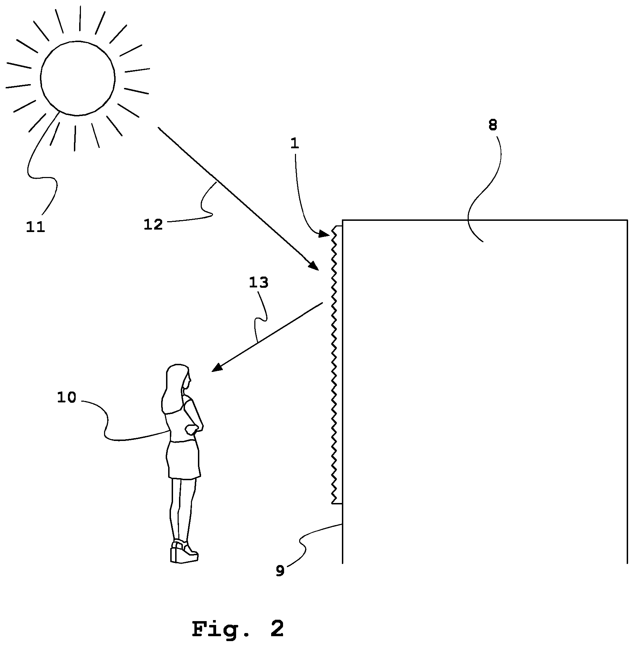

Thus, while sunlight can enter, a viewer 10, who is generally viewing a building 8 from a lower perspective, as is depicted in figure 2, will experience a wall provided with an image or decoration. Behind the cover structure a solar cell 9, e.g. a PV- or thermal-cell can be positioned, such that the solar radiation can enter substantially unhindered and unblocked and can be transformed into other forms of energy.

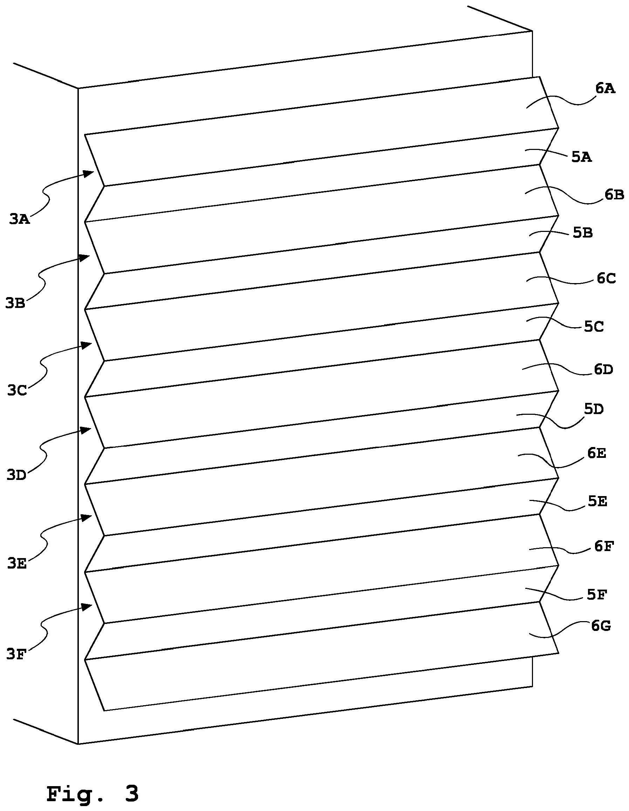

In figure 3 a front surface view of the cover structure is depicted. The surfaces 6A-6F of prisms 3A-3F are provided with a paint or coating, while the surfaces 5A-5F are uncoated. The individual layers of coating or paint can build up a wall spanning image or decoration, when viewed from a viewer's point of view.

In an alternative, the prism structure can be, after one set of the surfaces of the prisms is coated, provided with a second transparent material 13 that acts as a filler to fill up the crevices in between the individual prisms of a first transparent material 12. The refractive index of the second material 13 can be chosen, to manipulate the sunlight entering through. The layers 7 of paint or coating are acting as a filter, letting light in direction a pass through, while light from direction B is reflected or diffracted. Solar cell 9 can thus be covered and masked from visibility of the normal viewers in the street.

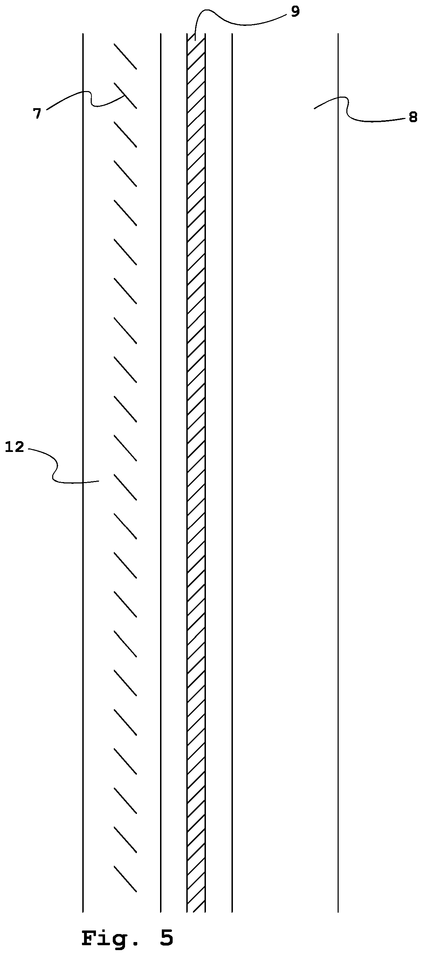

In an alternative, as depicted in figure 5, the filling material 13 is having the same refractive properties as the first material 12. Eventually the second material 13 can be the same material as the first material 12. The advantage of filling up the crevices, with the same material is that the entering sunlight exits the cover structure in substantially the same direction, while the collection of dirt or dust in the crevices in between the prisms can be prevented.

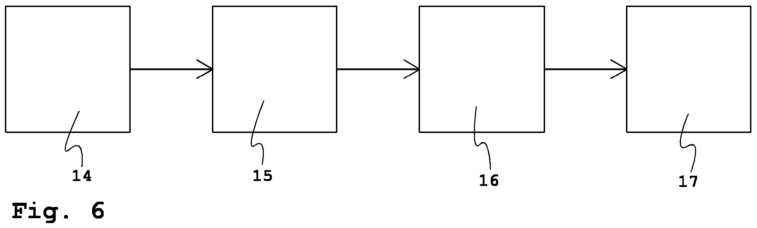

In figure 6 a schematic method of manufacturing is presented as a block diagram. The substrate is transported form a storage 14 to a prism embossing step 15, than to a selective coating step, in which one series of surfaces of the prisms is coated whereas the remaining set is not and after which the product is stored in a product storage 18.

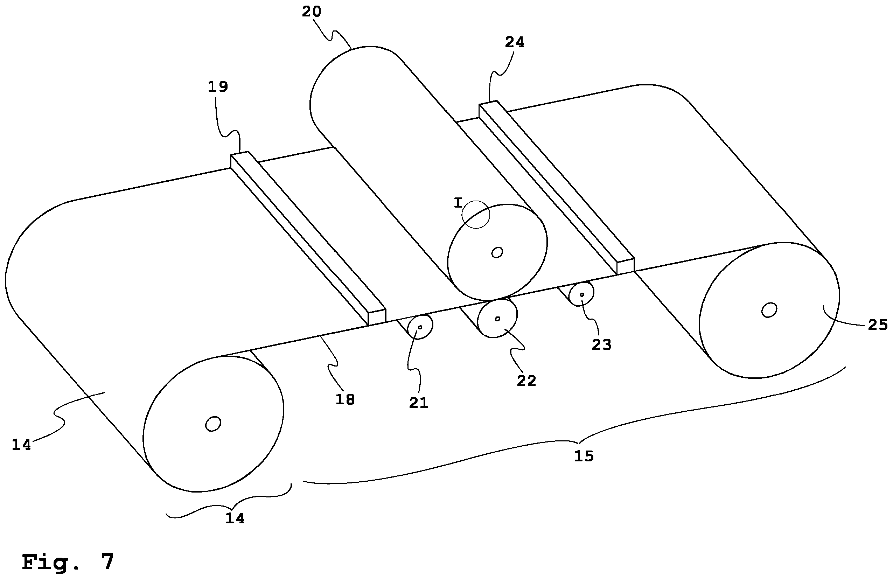

In figure 7 some more details are presented in a schematic perspective view. Here the substrate 18 originating from a storage 14 is transferred to a resin coater, where an even layer of resin is applied to the substrate. Here the resin can have the same or similar light properties as the substrate, or the resin can be a precursor for material that is the same as the substrate.

After the resin is applied, an embossing roll 20 embosses the prisms in the resin and cures the resin at the same time. This can be by applying heat to the resin and/or providing a strong UV radiation at the pinch point of the embossing roll 20. In order to have a proper quality of the embossed prisms, an embossing counter roll 22 is installed underneath the substrate 18, in order to squeeze the substrate including the resin to be cured through the pinch point. The counter embossing roll 22 can be of a light guiding material, such that a UV source inside the roller can shed light to the pinch point of the embossing roll 20. Alternatively the roll 22 can also provide heat in order to cure the resin in the pinch point. The embossing roll 20 itself can similarly provide light and/or heat to the resin at the pinch point.

Although in figure 7 the curing of the resin is performed in between the embossing roll 20 and an embossing counter roll 22, the counter roll 22 can be replaced with an UV light source, where the substrate 18 is pressed against the embossing roll 20 by tensioning the substrate 18. In this alternative, the support rollers 21 and 22 may be positioned higher than the lower part of the embossing roll 20, such that the tension in the substrate 18 can be set by the speed of the rotation of the substrate storage 14 and the product storage 25. Tension in the substrate 18 can further be fine tuned by the relative position of the support rollers 21 and 22, both in horizontal and vertical sense. Thus, also the length of the stretch of substrate 18 that is in contact with the embossing roll 20 can be adjusted.

The substrate can be supported by various support rolls 21 and 22. After the embossing, an additional after curing step 24 can be applied by a further heat and/or light source, in order to improve the stability of the prisms made. Hereafter the material can be stored on a product storage roll 25 or being fed to a following step, wherein a coating is applied selectively to one of the extending surfaces of the individual prisms only.

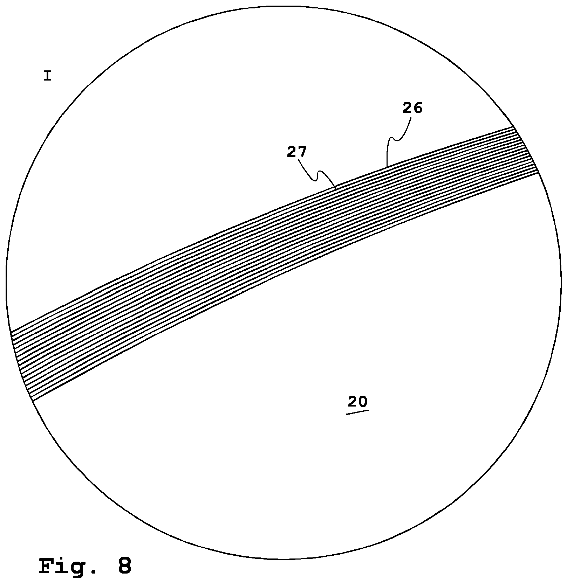

The prism embossing roll 20 can be provided with tangential prisms each following the circumference of the surface of the roll 20 in parallel circles, as is depicted in detail in figure 8. In this figure, the roll 20 is provided with a set of prisms 26 and 27, of which only a limited number is depicted.

Thus, by using this technique, the prism structure is parallel to the length of the substrate material 18 and the prisms are virtually endless. Alternatively, the prisms are following parallel lines parallel with the centreline of the roll 20. Thus the prisms are manufactured on the substrate perpendicular to the length of the substrate material 18. Alternatively the prisms in the embossing roll may follow spirals along the surface of the embossing roll 22, such that the prisms manufactured on the substrate are diagonally extending over the substrate material.

In order to provide the prism structure with a coating or paint, dedicated jet printer heads may be applied. Alternatively, e.g. with small prisms, photographic techniques may be applied to get the selective coating on one set of surfaces of the prisms only. A photosensitive layer, or a series of photosensitive layers may be coated on the prism structure, where after light from a specific direction exposes only one set of surfaces of the prisms, while leaving the other set of surfaces unexposed. The decoration or image of the cover structure can thus photographically be applied on the surfaces of selection only.

Dust and/or Water droplets on the cover structure may disperse the solar light and thus reduce the efficiency of the underlying solar panels. The outer and inner edges of the prisms may be rounded, in order to reduce dust and water from adhering to the prism surface. For instance in manufacturing the prisms 3, the edges of the prisms 28 and 29 may be manufactured rounded off. This may provide the advantage, that dust and/or water droplets from e.g. precipitation, condensation or during cleaning are more likely to run off and less likely to adhere. Thus the dust and/or water bearing load of the cover structure may be reduced.

Further the machining tools for machining e.g. the roll 20 may be provided with a rounding, corresponding to the rounding of the edges 28 and 29, which are chosen such to reach the effect of reducing the water bearing of the cover structure.

The invention is to be understood not to be limited to the exemplary embodiments shown in the figures and described in the specification. For instance the coating can be statically applied, by selective statically charging one set of surfaces of the prisms, while leaving the others uncharged, such that only one set of surfaces becomes coated.

In an alternative a rubber endless roll provided with a negative shape of the prisms may be applied for manufacturing separate substrate plates. This method may also be called a roll to plate process.

The application of photosensitive material may also be to provide selective surface properties of the two individual sets of surfaces of the prisms, where after a less precise printing step can be performed, in which the printing ink only attaches to one of the two sets of surfaces.

The cover structure may be provided with a adhesive coating on the substrate side, in order to attach the cover structure to e.g. a window or a photovoltaic or a thermal solar cell. This structure may be provided with an additional tear of cover sheet, for convenient handling of the cover structure.

The height of the prisms may be below 500 micro meter, below 50 micro meter or even below 25 micro meter. The quality of the image and the distance to the public may be taken into account in the design of the prisms, as well as the global latitude of the application of the cover structure.

These and other modifications are considered to be variations that are part of the framework, the spirit and the scope of the invention outlined in the claims.

### List of reference signs

- 1.: Cover structure
- 2.: Prism structure
- 3A-3F.: Prisms
- 4.: Face
- 5A-5G.: Face
- 6A-6G.: Face
- 7A-D.: Coating
- 8: Building
- 9.: Photovoltaic cell
- 10.: Person
- 11.: Sun
- 12.: First material
- 13.: Second material
- 14.: Substrate storage
- 15.: Prism embossing
- 16.: Selective coating
- 17.: Product storage
- 18.: Substrate
- 19.: Resin coater
- 20.: Embossing roll
- 21.: Support roll
- 22.: Embossing counter roll
- 23.: Support roll
- 24.: After curing
- 25.: Storage
- 26.: Prism
- 27.: Prism
- 28.: Edge
- 29.: Edge
- A.: Direction
- B.: Direction

## Claims

1. A cover structure (1) for solar modules, suitable for covering or masking these modules, comprising a sheet like material having a prismatic structure (2) of a series of predominantly parallel extending prisms (3A- 3F),
- wherein each prism of the series of prisms comprises at least a first elongated surface (5A - 5F) forming a first face of the prism and a second elongated surface (6A - 6F) forming a second face of the prism, the first and second elongated surfaces extending from a surface of the sheet like material (4);
- wherein the first and second elongated surfaces of the individual prisms are sharing the same or similar orientation with the first and the second elongated surfaces of the other prisms within the series;
wherein
- the first elongated surface forming the first face of each prism of the set of prisms is transparent, and
wherein the first and second elongated surfaces of the prisms extend from a first side of the sheet like material (4),
wherein the material is transparent having a first refractive index, and
wherein the prisms are embedded in a second material having a second refractive index, **characterized in that**:the second elongated surface (6A-6F) forming the second face of each prism of the set of prisms (3A-3F) is coated by a non-transparent layer (7A-7F) of ink or paint, wherein the non-transparent layer of ink or paint comprises a portion of a decoration or an image.

2. The cover structure according to claim 1, wherein the decoration or the image spans over at least a number of prisms or over the entire series of prisms (3A-3F) and wherein the decoration or image is composed of the individual portions.

3. The cover structure according to any of the preceding claims,
- wherein the second refractive index is different from the first refractive index; or
- wherein the second refractive index is the same as the first refractive index.

4. The cover structure according to any of the preceding claims, wherein the cover structure is applied on a photovoltaic solar cell or thermal solar cell.

5. The cover structure according to any of the preceding claims, wherein the prisms are less than 1 mm in height, e.g. less than 200 micro meter in height.

6. A method of manufacturing a cover structure according to any of the preceding claims, wherein the method comprises the following steps:
a) providing a substrate;
b) providing the substrate with prisms;
c) providing at least one of the surfaces of the individual prisms with a non-transparent coating being a portion of a decoration or of an image.

7. Method according to claim 6,
- wherein the prisms are made by an embossing roll;
- wherein a resin is applied to the substrate, and the embossing roll is transforming the resin to a layer on the substrate, in which layer the prisms are embossed and cured while embossing;
- wherein the curing takes place by means of heat or UV radiation at or near the pinch point of the embossing roll.

8. Method according to claim 6, wherein the prism structure is provided in a first positive mould, being provided with the prismatic structure from which is made a rubber negative second mould, in which second mould the prism structure of the cover is manufactured by moulding.

9. Method according to claim 6, wherein the prisms are manufactured by being grinded or machined.

10. Method according to claim 6, wherein the prism structure is fabricated through an extrusion or extrusion coating.

11. Method according to claim 6, wherein the coating is provided by means of a photographic method: e.g.:
a) coating the prism structure with a positive or negative photosensitive coating;
b) exposure to a directional light source,
c) developing the coating, such that on the second elongated surfaces (6A-6F) a coating remains,
d) printing and clearing either the first or the second surface, such that printed ink remains put on is the second elongated surfaces (6A-6F) only.

12. Method according to claim 6, wherein the coating is provided by means of precise inkjet printing, laser printing, spray coating or an engraved structure.

13. Method according to claim 6, wherein the substrate and the prisms are manufactured by extrusion through an appropriate die.

14. An assembly of a solar module and the cover structure according to any of claims 1-5.

## Patentansprüche

1. Abdeckungsstruktur (1) für Solarmodule, die zum Abdecken oder Maskieren dieser Module geeignet ist, umfassend ein folienartiges Material mit einer prismatischen Struktur (2) aus einer Reihe von sich überwiegend parallel erstreckenden Prismen (3A-3F),
- wobei jedes Prisma der Reihe von Prismen mindestens eine erste längliche Oberfläche (5A - 5F), die eine erste Fläche des Prismas bildet, und eine zweite längliche Oberfläche (6A - 6F), die eine zweite Fläche des Prismas bildet, umfasst, wobei sich die erste und die zweite längliche Oberfläche von einer Oberfläche des folienartigen Materials (4) erstrecken,
- wobei die ersten und die zweiten länglichen Oberflächen der einzelnen Prismen die gleiche oder eine ähnliche Ausrichtung wie die ersten und die zweiten länglichen Oberflächen der anderen Prismen innerhalb der Reihe haben,
wobei
- die erste längliche Oberfläche, die die erste Fläche jedes Prismas des Satzes von Prismen bildet, transparent ist und
wobei sich die ersten und die zweiten länglichen Oberflächen der Prismen von einer ersten Seite des folienartigen Materials (4) erstrecken,
wobei das Material transparent ist und einen ersten Brechungsindex aufweist und
wobei die Prismen in ein zweites Material eingebettet sind, das einen zweiten Brechungsindex aufweist, **dadurch gekennzeichnet, dass**:die zweite längliche Oberfläche (6A-6F), die die zweite Fläche jedes Prismas des Satzes von Prismen (3A-3F) bildet, durch eine nicht transparente Schicht (7A-7F) aus Tinte oder Farbe beschichtet ist, wobei die nicht transparente Schicht aus Tinte oder Farbe einen Abschnitt einer Verzierung oder eines Bildes umfasst.

2. Abdeckungsstruktur nach Anspruch 1, wobei die Verzierung oder das Bild mindestens eine Anzahl von Prismen oder die gesamte Reihe von Prismen (3A-3F) überspannt und wobei die Verzierung oder das Bild aus den einzelnen Abschnitten zusammengesetzt ist.

3. Abdeckungsstruktur nach einem der vorhergehenden Ansprüche,
- wobei sich der zweite Brechungsindex von dem ersten Brechungsindex unterscheidet; oder
- wobei der zweite Brechungsindex der gleiche wie der erste Brechungsindex ist.

4. Abdeckungsstruktur nach einem der vorhergehenden Ansprüche, wobei die Abdeckungsstruktur auf einer photovoltaischen Solarzelle oder einer thermischen Solarzelle aufgebracht ist.

5. Abdeckungsstruktur nach einem der vorhergehenden Ansprüche, wobei die Prismen eine Höhe von weniger als 1 mm haben, z. B. eine Höhe von weniger als 200 Mikrometern.

6. Verfahren zum Herstellen einer Abdeckungsstruktur nach einem der vorhergehenden Ansprüche, wobei das Verfahren die folgenden Schritte umfasst:
a) Bereitstellen eines Substrats;
b) Versehen des Substrats mit Prismen;
c) Versehen mindestens einer der Oberflächen der einzelnen Prismen mit einer nicht transparenten Beschichtung, die ein Abschnitt einer Verzierung oder eines Bildes ist.

7. Verfahren nach Anspruch 6,
- wobei die Prismen durch eine Prägewalze gefertigt werden;
- wobei ein Harz auf das Substrat aufbracht wird und die Prägewalze das Harz in eine Schicht auf dem Substrat umwandelt, wobei die Prismen in diese Schicht geprägt und beim Prägen gehärtet werden;
- wobei das Härten mittels Wärme oder UV-Strahlung am oder nahe dem Quetschpunkt der Prägewalze erfolgt.

8. Verfahren nach Anspruch 6, wobei die Prismenstruktur in einer ersten Positivform bereitgestellt wird, die mit der prismatischen Struktur versehen ist, aus der eine zweite Negativform aus Gummi gefertigt wird, wobei die Prismenstruktur der Abdeckung durch Formen in der zweiten Form hergestellt wird.

9. Verfahren nach Anspruch 6, wobei die Prismen durch Schleifen oder maschinelles Bearbeiten hergestellt werden.

10. Verfahren nach Anspruch 6, wobei die Prismenstruktur durch eine Extrusion oder Extrusionsbeschichtung produziert wird.

11. Verfahren nach Anspruch 6, wobei die Beschichtung mittels eines fotografischen Verfahrens bereitgestellt wird: z. B.:
a) Beschichten der Prismenstruktur mit einer positiven oder negativen lichtempfindlichen Beschichtung,
b) Exposition gegenüber einer gerichteten Lichtquelle,
c) Entwickeln der Beschichtung, sodass auf den zweiten länglichen Oberflächen (6A-6F) eine Beschichtung verbleibt,
d) Bedrucken und Reinigen entweder der ersten oder der zweiten Oberfläche, sodass nur gedruckte Tinte, die auf den zweiten länglichen Oberflächen (6A-6F) positioniert ist, verbleibt.

12. Verfahren nach Anspruch 6, wobei die Beschichtung mittels präzisem Tintenstrahldruck, Laserdruck, Sprühbeschichtung oder einer gravierten Struktur bereitgestellt wird.

13. Verfahren nach Anspruch 6, wobei das Substrat und die Prismen durch Extrusion durch eine geeignete Matrize hergestellt werden.

14. Baugruppe aus einem Solarmodul und der Abdeckungsstruktur nach einem der Ansprüche 1-5.

## Revendications

1. Structure de couverture (1) pour modules solaires, qui convient pour couvrir ou masquer ces modules, comprenant un matériau de type feuille comportant une structure prismatique (2) d'une série de prismes s'étendant principalement parallèlement (3A-3F),
- chaque prisme de la série de prismes comprenant au moins une première surface allongée (5A - 5F) formant une première face du prisme et une seconde surface allongée (6A - 6F) formant une seconde face du prisme, les première et seconde surfaces allongées s'étendant à partir d'une surface du matériau de type feuille (4) ;
- lesdites première et seconde surfaces allongées des prismes individuels partageant la même orientation ou une orientation similaire avec les première et seconde surfaces allongées des autres prismes de la série ;
- ladite première surface allongée
formant la première face de chaque prisme de l'ensemble de prismes étant transparente, et lesdites première et seconde surfaces allongées
des prismes s'étendant à partir d'un premier côté du matériau de type feuille (4),
ledit matériau étant transparent comportant un premier indice de réfraction, et
lesdits prismes étant incorporés dans
un second matériau comportant un second indice de réfraction, **caractérisé en ce que** : la seconde surface allongée (6A-6F) formant la seconde face de chaque prisme de l'ensemble de prismes (3A-3F) est revêtue d'une couche non transparente (7A-7F) d'encre ou de peinture, ladite couche non transparente d'encre ou de peinture comprenant une partie d'une décoration ou d'une image.

2. Structure de couverture selon la revendication 1, ladite décoration ou ladite image s'étendant sur au moins un nombre de prismes ou sur toute la série de prismes (3A-3F) et ladite décoration ou ladite image étant
composée des parties individuelles.

3. Structure de couverture selon l'une quelconque des revendications précédentes,
- ledit second indice de réfraction étant différent du premier indice de réfraction ; ou
- ledit second indice de réfraction étant le même que le premier indice de réfraction.

4. Structure de couverture selon l'une quelconque des revendications précédentes, ladite structure de couverture étant appliquée sur une cellule solaire photovoltaïque ou une cellule solaire thermique.

5. Structure de couverture selon l'une quelconque des revendications précédentes, lesdits prismes comportant une hauteur inférieure à 1 mm, par exemple une hauteur inférieure à 200 micromètres.

6. Procédé de fabrication d'une structure de couverture selon l'une quelconque des revendications précédentes, ledit procédé comprenant les étapes suivantes :
a) la fourniture d'un substrat ;
b) la fourniture au substrat de prismes ;
c) la fourniture à au moins l'une des surfaces des prismes individuels d'un revêtement non transparent
qui est une partie d'une décoration ou d'une image.

7. Procédé selon la revendication 6,
- lesdits prismes étant réalisés par un rouleau de gaufrage ;
- une résine étant appliquée sur le substrat, et ledit rouleau de gaufrage transformant la résine en une couche sur le substrat, couche dans laquelle les prismes sont gaufrés et durcis pendant le gaufrage ;
- ledit durcissement a lieu au moyen de chaleur ou d'un rayonnement UV au niveau ou à proximité du point de pincement du rouleau de gaufrage.

8. Procédé selon la revendication 6, ladite structure prismatique étant fournie dans un premier moule positif, qui est doté de la structure prismatique à partir de laquelle est réalisée un second moule négatif en caoutchouc, second moule dans lequel la structure prismatique de couverture est fabriquée par moulage.

9. Procédé selon la revendication 6, lesdits prismes étant produits par meulage ou usinage.

10. Procédé selon la revendication 6, ladite structure prismatique étant fabriquée par extrusion ou revêtement par extrusion.

11. Procédé selon la revendication 6, ledit revêtement étant réalisé au moyen d'un procédé photographique : par exemple :
a) le revêtement de la structure prismatique d'un revêtement photosensible positif ou négatif ;
b) l'exposition à une source lumineuse directionnelle,
c) le développement du revêtement, de sorte que sur des secondes surfaces allongées (6A-6F) un revêtement reste,
d) l'impression et le nettoyage soit de la première, soit de la seconde surface, de sorte que l'encre imprimée reste appliquée sur les secondes surfaces allongées (6A-6F) uniquement.

12. Procédé selon la revendication 6, ledit revêtement étant réalisé au moyen d'une impression à jet d'encre précise, d'une impression laser, d'un revêtement par pulvérisation ou d'une structure gravée.

13. Procédé selon la revendication 6, ledit substrat et lesdits prismes étant fabriqués par extrusion par l'intermédiaire d'une filière appropriée.

14. Assemblage d'un module solaire et de la structure de couverture selon l'une quelconque des revendications 1 à 5.
